# EUROPEAN PATENT APPLICATION

(11) **EP 0 915 036 A1**
(43) Date of publication of application: **12.05.1999**
(21) Application number: 97830571.2
(22) Date of filing: 04.11.1997
(51) Int. Cl.: B65G 1/00, B65G 15/54, B65G 17/08

(54) **Conveyor belt for uses with heavy loads and/or at high temperatures**

(71) Applicant: COSTACURTA S.p.A. VICO, I-20161 Milano (IT)
(72) Inventor: Arlati, Marco, 23848 Oggiono (Lecco) (IT); Rosa, Lodovico, 23900 Lecco (IT)
(74) Representative: Marietti, Giuseppe

(57) **Abstract**

The invention relates to a conveyor belt, especially for heavy loads and/or transport in high temperature environments, comprising a plurality of thread-like metal spiral-shaped elements joined at each extremity to a successive element by means of linking pivots. To increase the mechanical resistance of the belt and ensure a good flexing, the two extremity sections of each coil enclosing the said linking pivots are parallel and arranged respectively in planes perpendicular to the said linking pivots and there is at least one oblique link section between two consecutive extremity sections of the coils.

## Description

The present invention relates to a conveyor belt, in particular suited to heavy loads and/or to uses at high temperature, for instance in ovens for heat treatment or for sintering.

The plants in which conveyor belts of the type in question are used usually comprise, in their more schematic embodiments, a metal belt of appropriate dimensions, two rollers set at the external extremities of the belt run to serve the function of driver of the same belt, and a belt tensioner. This belt must obviously be articulated perpendicularly to the direction of motion, so that it can adapt to and rotate on the aforesaid rollers.

The belt comprises a plurality of metal elements which constitute the supporting plane of the transported material and which are linked in rotation at each of their extremities by means of a suitable pivot, or cross-bar.

Each of such pivots, mutually parallel and arranged perpendicularly to the direction of the motion of the belt, constitutes a junction element between two of the said metal elements and allows the belt to adopt the curvature corresponding to the profile of each roller.

In particular, such metal elements, above all in uses which require the belt to bear heavy loads and/or undergo wide variations of temperature, are preferably formed from elongated wire spirals of suitable dimensions and material, consisting of a plurality of coils acting to engage the said pivots, usually cylindrical, in a plane transversal to the axis of the same pivots.

The density of the coils per unit width of the belt and their angle of incidence with respect to the cylindrical pivots - and therefore the distance between adjacent coils - determine the properties of articulation and of strength in traction of the same belt: a high coil density involves high mechanical strength but at the same time a low ability on the part of the belt to adopt the required degree of articulation.

Where the conveyor belt is used in activity which involves wide variations of temperature such demands of mechanical strength in traction and of articulation of the belt become critical, since to the mechanical effects of traction on the belt are added heat effects which significantly reduce the mechanical characteristics of the same belt and hinder the rotation of the coils on the pivots.

In order to balance the belt on its supports during movement, it is current practice to alternate coils with clockwise spiral and coils with anti-clockwise spiral, so that two spirals with opposite sense of spin oppose each other on each junction pivot in a plane substantially transversal with respect to the axis of the same pivot.

According to this arrangement, the extremity section of the spirals of two adjacent coils are mutually arranged at an angle to the direction of advancement of the belt and this inclination determines the minimum separation distance of the coils on the pivot, in function of: the diameter of the wire forming the spiral, the diameter of the pivot and the distance between two successive pivots.

This solution allows the belt to adapt to the required curvature fairly easily, but limits the number of coils of spiral per unit width of the belt and therefore the mechanical strength in traction of the same belt, which has therefore a reduced useful transportable load because of the reduced number of coils which can be accomodated on each pivot.

Furthermore, in a belt thus conformed, the application of the load induces the coils of each element to close up to each other, with the consequent reduction of the working support surface of the belt and increase in friction generated between the coils arranged on each pivot, making the articulation of the same belt more difficult.

These negative consequences are seen to be amplified in uses with heavy loads and/or at high temperatures.

A further drawback of the spiral embodiments described above derives from the arched profile in a section parallel to the direction of motion of each spiral: indeed, such profile could enter into contact with the support surface over which the belt slides, generating local frictions which would quickly wear the coils themselves.

The purpose of the present invention is to produce a conveyor belt especially suited for use with heavy loads and/or at high temperatures, which has high mechanical strength in traction but which is at the same time easily articulated and which does not change in width.

It is a further purpose of the present invention to produce a conveyor belt which has the characteristics described above and which furthermore is not subject to wear of the coils against the support surface over which the belt slides.

Such purposes are achieved by the present invention, by means of the conveyor belt as claimed in Claim 1.

Further characteristics are described in the following Claims.

The new conveyor belt comprises a plurality of spiral-shaped thread-like metal elements with suitable profile, linked in rotation by substantially cylindrical and parallel pivots or cross-bars, to form a continuous articulated belt, which can be set in movement by a roller.

Each coil of the spiral elements presents two opposed substantially semicircular sections to enclose each of the extremity pivots and two transverse sections linking the semicircular sections and respectively connecting to the adjacent coil. Such semicircular sections are parallel and arranged in a plane perpendicular to the extremity pivot, while at least one of the transverse sections presents a substantially "S" configuration with an oblique portion.

Some forms of preferred embodiment of the belt according to the invention will now be described by way of example and not of limitation, with reference to the attached sketches, in which:
Figure 1 is a partial axonometric view of the conveyor belt;
Figure 2 is a plan view of the conveyor belt, showing an extremity section where two successive thread-like spiral elements are hinged;
Figure 3 is a plan view of an individual coil of each spiral-shaped element and of the junction between two coils in the belt of fig. 2;
Figure 4 is an enlarged plan view of an extremity section where two successive spiral elements are hinged together;
Figure 5 is a view of two of the said thread-like spiral elements in section perpendicular to the sliding plane of the belt;
Figure 6 is a plan view of the conveyor belt according to a different embodiment;
Figures 7 to 13 show, in plan view and in longitudinal section, different possible forms of embodiment of the belt according to the invention.

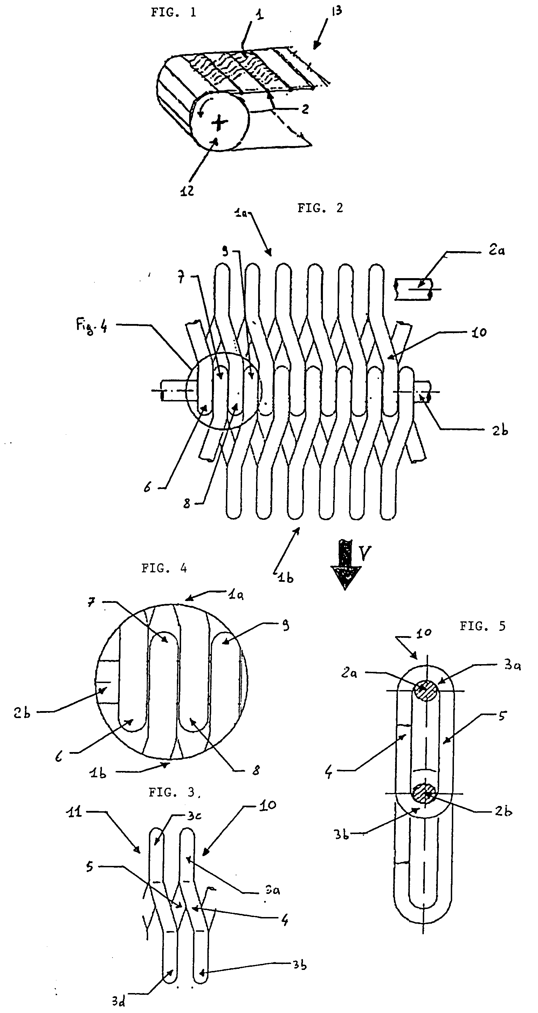

With reference to Figure 1, the conveyor belt 13, driven by a suitable roller 12, comprises a plurality of thread-like metal spiral-shaped elements 1, linked together, two by two, by the cylindrical extremity pivots 2. The cylindrical extremity pivots 2 are parallel and allow the relative rotation of the spiral elements 1.

As shown in figure 2, each thread-like metal spiral-shaped element 1a comprises a plurality of coils 10, which form the supporting plane of the conveyor belt and enclose at their two extremities the cylindrical pivots 2a and 2b which link the said coil 1a.

With reference to figures 2 and 3, each coil 10 of this thread-like spiral element 1a comprises two opposed substantially semicircular extremity sections 3a and 3b acting as enclosures for the parallel extremity pivots 2a and 2b respectively, an upper transverse linking section 4 and a lower linking section 5 which link with successive semicircular extremity sections.

Link section 4, as shown in figure 3, connects the extremity section 3a and 3b, while link section 5 connects the extremity section 3a and 3d.

In the embodiment illustrated in figures 1-5, the opposed semicircular sections 3a and 3b of each coil 10 lie respectively in two parallel planes, which preferentially are separated by a distance substantially equal to the diameter or to the width of the thread-like metal element 1, and are connected by 4 and 5 which are consequently oblique and which cause the profile in plan of said coils 10 to be "S"-shaped. Furthermore each of the said planes, generated from the semicircular extremity sections 3a and 3b of each coil 10, is perpendicular to the axis of the respective extremity pivots 2a and 2b. Therefore, as shown in detail in figure 4, the semicircular extremity sections 6, 8, 7, 9 of the coils of two successive spiral elements 1a and 1b are arranged on the extremity pivot 2b which they enclose in such a way as to alternate and be substantially in mutual contact.

With reference to Figure 5, the link sections 4 and 5 are straight and parallel to each other in the section which is transverse with respect to the direction of motion.

The shape selected for the coils 10 of the thread-like spiral elements 1, allows a high density of coils to be arranged on each extremity pivot 2, making the conveyor belt particularly strong in traction and able to adopt the required curvature on the roller 12, even in uses at high temperature and/or with heavy loads.

Furthermore, the arrangement of the semicircular sections of each coil perpendicular with respect to the extremity pivots confers on the thread-like spiral elements the characteristic of maintaining the width dimension unchanged, even when subjected to heavy loads.

Finally, the flattened profile of the transverse section of each single spiral element avoids the localized wear which could be produced by the support surface over which the belt slides.

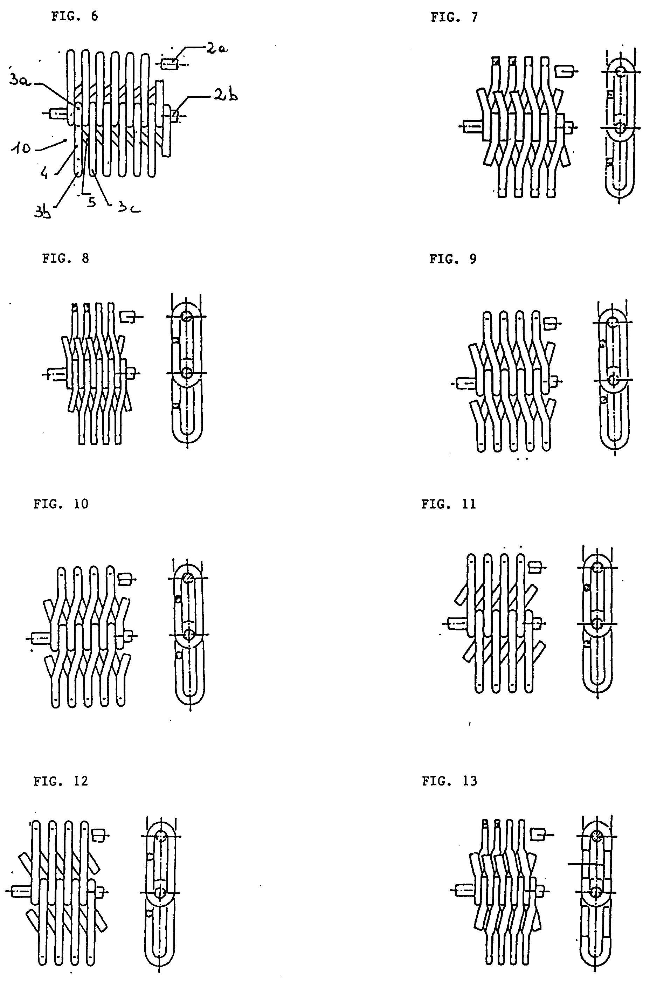

Figure 6 illustrates a different embodiment of the belt, according to which the transverse section 4 which connects the two semicircular extremity 3a and 3b is also perpendicular to the extremity pivot 2b, while only the link section 5, which connects the semicircular extremities 3a and 3c, remains oblique.

Figures 7 to 14 show schematically different possible forms of embodiment of the present invention, which are as follows:
Figure 7: belt with square cross-section bar in spiral.
Figure 8: belt with spiral in rectangular cross-section bar; allows a higher number of coils per unit length of the pivot for the same cross-sectional area of spiral.
Figure 9: belt with clockwise only spiral.
Figure 10: belt with anti-clockwise only spiral.
Figure 11: belt with clockwise spiral and a straight section.
Figure 12: belt with anti-clockwise spiral and a straight section.
Figure 13: belt with spiral in round bar and flattened extremity sections allowing a higher number of coils per unit length of the pivot for the same spiral cross-sectional area.

## Claims

1. Conveyor belt comprising a plurality of thread-like metal spiral-shaped elements joined at each extremity to a successive element by means of linking pivots, characterized by the two extremity sections of each coil which enclose the said linking pivots being parallel and being arranged respectively in planes perpendicular to the said linking pivots and by there being at least one oblique section linking two consecutive extremity sections of the coils.

2. Conveyor belt according to Claim 1, characterized by the said extremity sections of the coil defining separate parallel planes and by being joined by oblique link sections, so that the coil is "S"-shaped in plan.

3. Conveyor belt according to Claim 1, characterized by the said extremity section of the coils lying in the same plane and being joined respectively by a transverse perpendicular link section and a link section which is oblique with respect to each of the said linking pivots

4. Conveyor belt according to Claim 2 or 3, characterized by the distance between each of the said semicircular sections of each of the said thread-like spiral elements in the direction parallel to the axis of the pivot being substantially equal to the width of the said semicircular sections.

5. Conveyor belt according to Claim 4, characterized by each of the said semicircular extremity sections of each of the said thread-like spiral elements being substantially in mutual contact with the adjacent semicircular section of the said successive spiral element.

6. Conveyor belt according to an any of the preceding Claims, characterized by the profile, in a section perpendicular to the sliding plane of the belt, of each of the said thread-like spiral-shaped elements having two straight parallel sections.

7. Conveyor belt according to any of the preceding Claims, characterized by each of the said thread-like spiral elements being circular in cross-section.

8. Conveyor belt according to any of the Claims from 1 to 6, characterized by each of the said thread-like spiral elements being rectangular in cross-section.

9. Conveyor belt according to Claim 7 or 8, characterized by the said thread-like spiral elements having a flattened section at least in the zones of contact between coils of successive thread-like spiral elements.

10. Conveyor belt according to any of the preceding Claims, characterized by the said successive thread-like spiral elements spiraling in the opposite sense to them.

11. Conveyor belt according to any of the Claims from 1 to 9, characterized by the said successive thread-like spiral elements spiralling in the same sense as them.
